# EUROPEAN PATENT SPECIFICATION

(11) **EP 3 986 080 B1**
(45) Date of publication and mention of the grant of the patent: **23.10.2024**
(21) Application number: 20201467.6
(22) Date of filing: 13.10.2020
(51) Int. Cl.: H04W 76/10, H04W 74/08, H04W 88/08, H04W 72/12

(54) **APPARATUSES, METHODS AND SYSTEM FOR DECIDING SINGLE-PHASE OR MULTI-PHASE CONFIGURATION OF A UE**
GERÄTE, VERFAHREN UND SYSTEM ZUR ENTSCHEIDUNG EINER EIN- ODER MEHRPHASIGEN KONFIGURATION EINES UE
DISPOSITIFS, PROCEDES ET SYSTEME PERMETTANT DE DECIDER DE LA CONFIGURATION MONOPHASEE OU MULTIPHASEE D'UNE UE

(43) Date of publication of application: 20.04.2022
(73) Proprietor: Nokia Technologies Oy, 02610 Espoo (FI)
(72) Inventor: ALWAR, Ethiraj, 560093 Bangalore (IN); CHANDRASHEKAR, Subramanya, 560079 Bangalore (IN); KRISHNAMURTHY, Raghuram Reddy, 560070 Bangalore (IN)
(74) Representative: Script Intellectual Property LLP

(56) References cited:
- WO-A1-2020/072793
- US-A1- 2019 253 937
- ZTE ET AL: "Left issues on F1 for support of NR V2X", vol. RAN WG3, no. Reno, NSA; 20191118 - 20191122, 9 November 2019 (2019-11-09), XP051823897, Retrieved from the Internet <URL:https://ftp.3gpp.org/tsg_ran/WG3_Iu/TSGR3_106/Docs/R3-196693.zip R3-196693 Left issues on F1 for support of NR V2X.doc> [retrieved on 20191109]
- NOKIA ET AL: "Feature lead summary#3 on 2 step RACH procedures", vol. RAN WG1, no. Reno, USA; 20190513 - 20190517, 20 May 2019 (2019-05-20), pages 1 - 59, XP051740159, Retrieved from the Internet <URL:http://www.3gpp.org/ftp/tsg%5Fran/WG1%5FRL1/TSGR1%5F97/Docs/R1%2D1907900%2Ezip> [retrieved on 20190520]
- GOOGLE INC: "Transfer of CG-ConfigInfo in SA - Option 1 (G402)", no. Gothenburg, Sweden; 20180820 - 20180824, 10 August 2018 (2018-08-10), XP051521090, Retrieved from the Internet <URL:http://www.3gpp.org/ftp/tsg%5Fran/WG2%5FRL2/TSGR2%5F103/Docs/R2%2D1811434%2Ezip> [retrieved on 20180810]

## Description

### Field of the Disclosure

Various example embodiments relate to an apparatus comprising at least one processor.

Further embodiments relate to a method of operating related to such apparatus.

### Background

Wireless communications systems may e.g. be used for wireless exchange of information between two or more entities such as a user equipment and a network, e.g. comprising at least one network node, e.g. a base station.

For initial access of user equipment to the network, the user equipment may be supplied with configuration information.

3GPP Change Request R1-1907900, titled "2-step RACH procedure lead summary" from RAN1#97, published on 2019-05-20 discloses a network which configures a UE for both 2 step RACH and 4-step RACH. The UE determines which RACH procedure to use based on different parameters, e.g. radio conditions.

### Summary

Various embodiments of the disclosure are set out by the independent claims. The exemplary embodiments and features, if any, described in this specification, that do not fall under the scope of the independent claims, are to be interpreted as examples useful for understanding various exemplary embodiments of the disclosure.

Some embodiments relate to an apparatus, comprising at least one processor, and at least one memory storing instructions, the at least one memory and the instructions configured to, with the at least one processor, cause a base station to determine a first information which characterizes at least one of a) a position of a user equipment establishing access to the base station relative to at least one component of the base station (e.g., the base station itself or a component such as e.g. a remote radio head), b) radio conditions experienced by a user equipment, and to determine, based on the first information, whether to perform a single phase configuration or a multi-phase configuration for the user equipment. In some embodiments, this enables to flexibly adapt the configuration based on e.g. the first information.

In some embodiments, the apparatus may be an apparatus for a wireless communications system.

In some embodiments, the apparatus or its functionality, respectively, may be provided in a network element of the communications systems, for example in a base station, e.g. a gNodeB (gNB).

In some embodiments, the apparatus according to the embodiments or its functionality, respectively, may be used for or within wireless communications systems, e.g. networks, based on or at least partially adhering to third generation partnership project, 3GPP, radio standards such as 5G (fifth generation) or other radio access technology.

In some embodiments, the instructions, when executed by the at least one processor, further cause the base station to determine the first information based on a setup request from the user equipment.

In some embodiments, the single phase configuration characterizes a configuration of the user equipment which can be performed in one stage, e.g. using one (e.g., single) message exchange with the user equipment.

In some embodiments, the multi-phase configuration characterizes a configuration of the user equipment which uses more than one stage, e.g. using two stages, e.g. using more than one message exchange with the user equipment.

In some embodiments, the instructions, when executed by the at least one processor, further cause the base station to individually determine the first information and/or whether to perform a single phase configuration or a multi-phase configuration for a specific user equipment, e.g. based on the setup request of the specific user equipment. In other words, according to some embodiments, the base station may provide for a UE-specific type of configuration (e.g., single-phase or multi-phase, e.g. two-phase), e.g. based on individual criteria such as the first information or characterized by the first information. In some embodiments, this enables to flexibly and dynamically (e.g., during operation of the base station) adapt the type of configuration for a (newly) accessing user equipment based on individual operating conditions of the respective user equipment.

In some embodiments, the individual operating conditions of a user equipment may comprise and/or characterize at least one of: a) position of the user equipment with respect to the base station and/or a component (e.g., remote radio head (RRH) or the like) of the base station (e.g., distance between the user equipment and the base station or at least one component of the base station such as an RRH), b) radio conditions experienced by the user equipment (e.g. characterized by a signal-to-noise ratio (SNR)), c) modulation and coding scheme (MCS).

In some embodiments, a timing advance (TA) value and/or an estimation of the TA value, e.g. based on a preamble transmitted by the user equipment to the base station in an uplink transmission during initial access, e.g. a random access channel (RACH) preamble, e.g. from a particular range, of the user equipment, may be used to determine a relative position of the user equipment with respect to the (component of) the base station and/or the distance between the user equipment and the (component of) the base station.

In some embodiments, a comparatively high sampling rate may be used for processing such (RACH) preamble of the user equipment, to increase a precision of the TA estimation.

In some embodiments, an estimated distance between the user equipment and the base station and/or a component (e.g., RRH) of the base station may, optionally together with a parameter characterizing radio conditions (e.g., SNR, RSRP, etc.), be employed to determine if the user equipment is closer to a base station (or RRH), e.g. a center of a radio cell as provided by the base station (or its RRH), or if it is further away, e.g. at a cell edge.

In some embodiments, the user equipment may be classified into one of at least two classes characterizing the distance between the position of the user equipment and the base station (or its RRH), and the first information may e.g. comprise and/or characterize (e.g., amongst others) this classification.

In some embodiments, the first information may comprise one bit, e.g. indicating whether the user equipment is associated with a first class comprising user equipment closer to a cell center than to a cell edge, or with a second class comprising user equipment closer to the cell edge than to the cell center of the radio cell. In some embodiments, the user equipment may determine its class based on the experienced RSRP in its location. In some embodiments, based on this first information, the base station may determine whether to perform a single-phase or multi-phase, e.g. two-phase, configuration for the user equipment.

In some embodiments, the instructions, when executed by the at least one processor, further cause the base station to a) determine to perform a single phase configuration for the user equipment if at least one of the following criteria is satisfied: aa) radio parameters indicative of a distance between the user equipment and the at least one component of the base station is below a first threshold, bb) the radio conditions (e.g., as may be characterized by the SNR and/or another suitable parameter) experienced by the user equipment exceed a second threshold, cc) a complexity of a target modulation and coding scheme associated with the user equipment exceeds a third threshold. In some embodiments, in these cases it may be concluded that a single-phase configuration of a specific user equipment may be more efficient than a multi-phase configuration.

In some embodiments, the instructions, when executed by the at least one processor, further cause the base station to a) determine to perform a multi-phase configuration, for example a two-phase configuration, for the user equipment if at least one of the following criteria is satisfied: aa) radio parameters indicative of a distance between the user equipment and the at least one component of the base station exceeds the first threshold, bb) the radio conditions experienced by the user equipment are below the second threshold, cc) a complexity of a target modulation and coding scheme associated with the user equipment is below the third threshold. In some embodiments, in these cases it may be concluded that a multi-phase, e.g. two-phase, configuration of a specific user equipment may be more efficient than a single-phase configuration.

In some embodiments, the instructions, when executed by the at least one processor, further cause the base station to perform the configuration for the user equipment based on the determination whether to perform a single phase configuration or a multi-phase configuration for the user equipment.

In some embodiments, the base station comprises a central unit and at least one distributed unit, wherein the instructions, when executed by the at least one processor, cause the at least one distributed unit to receive a setup request, e.g. connection setup request, from the user equipment, to determine the first information based on the setup request, e.g. connection setup request, and to transmit the first information to the central unit.

In some embodiments, the base station may be a base station for a 5G network, e.g. a gNB. In some embodiments, the gNB may e.g. be split, e.g. at least regarding its logical architecture, into a central unit (CU or gNB-CU) and at least one distributed unit (DU or gNB-DU). As an example, in some embodiments, the at least one DU may e.g. comprise or represent an RRH.

In some embodiments, the setup request from the user equipment may be a setup request, e.g. connection setup request, according to some accepted specification, e.g. a Radio Resource Control (RRC) setup request.

In some embodiments, the distributed unit may use an interface according to some accepted specification, e.g. an F1 interface, for transmitting the first information to the central unit.

In some embodiments, the distributed unit may use a protocol according to some accepted specification, e.g. an F1 Application Protocol (F1AP), for transmitting the first information to the central unit.

In some embodiments, the base station comprises a central unit and at least one distributed unit, wherein the instructions, when executed by the at least one processor, cause the at least one distributed unit to receive a setup request (e.g., RRC setup request) from the user equipment and to signal (e.g., over the F1 interface and/or using e.g. the F1AP) to the central unit whether to perform a single phase configuration or a multi-phase configuration for the user equipment based on the setup request.

In some embodiments, the instructions, when executed by the at least one processor, further cause the central unit to receive the first information from the at least one distributed unit, and to determine, based on the received first information, whether to perform a single phase configuration or a multi-phase configuration for the user equipment.

In some embodiments, e.g. when the gNB-DU receives an RRC setup request message from a user equipment, the gNB-DU may detect a radio condition experienced by the user equipment and may e.g. signal assistance information, e.g. based on the detected radio condition, to the gNB-CU, e.g. a gNB-CU-Control Plane (gNB-CU-CP). In some embodiments, the assistance information may comprise and/or characterize the first information according to the embodiments.

In other words, in some embodiments, the gNB-DU may share the first information, e.g. assistance information, with the gNB-CU, e.g. with the gNB-CU-CP, e.g. over the F1 interface.

In some embodiments, the gNB-DU may signal to the gNB-CU, e.g. to the gNB-CU-CP, to use a one-phase configuration for the user equipment. In some embodiments, after receipt of this signaling, the gNB may use the one-phase configuration for the user equipment, e.g. encoding and signaling a corresponding setup message to the user equipment, e.g. an RRC SETUP message.

In some embodiments, the gNB-DU may signal to the gNB-CU, e.g. to the gNB-CU-CP, to use a multi-phase, e.g. two-phase, configuration for the user equipment. In some embodiments, after receipt of this signaling, the gNB may use the multi-phase, e.g. two-phase, configuration for the user equipment, e.g. encoding and signaling a corresponding setup message and at least one further message to the user equipment, e.g. an RRC SETUP message and an RRC Reconfiguration message.

In some embodiments, an accepted specification, e.g. the FLAP specification, may be enhanced, e.g. to introduce the first information, e.g. assistance information, e.g. in the form of one or more additional, e.g. optional, information elements (IEs).

In some embodiments, e.g. for a one-phase configuration, a legacy IE may be used, e.g. a CellGroupConfig IE.

In some embodiments, one or more new, e.g. additional, IEs may be included in an F1 message, e.g. in an F1: "INITIAL UL RRC MESSAGE TRANSFER" message, e.g. according to 3GPP TS 38.473 (see for example 3GPP TS 38.473, version 15.3.0 Release 15 chapter 9.2.3.1). In some embodiments, the additional information elements may e.g. comprise:
a) a first additional IE, e.g. "CellGroupConfig-MinConfig", which may e.g. be included with minimum CellGroupConfig, which may for example be used by the CU-CP, e.g. to encode an RRC SETUP message,
b) a second additional IE, e.g. "CellGroupConfig-Remaining", which may be included with remaining CellGroupConfig (information), which may e.g. be used by the CU-CP, e.g. to encode an RRC RECONFIGURATION message.
c) a third additional IE, e.g. "ConfigOptionIndication", which may e.g. be a flag (e.g. bit flag) which indicates a recommended configuration, e.g. whether to use one-phase configuration or multi-phase, e.g. two-phase, configuration.

In some embodiments at least some of the above listed additional IEs a), b), c) may e.g. be included in the F1: INITIAL UL RRC MESSAGE TRANSFER message.

In some embodiments at least some of the above listed additional IEs a), b), c) may be optional.

In some embodiments at least one of the above listed additional IEs a), b), c) may be included (e.g. in the INITIAL UL RRC MESSAGE TRANSFER message), e.g. transmitted to the gNB-CU, if the gNB-DU determines to use multi-phase, e.g. two-phase, configuration.

In some embodiments the above listed additional IEs a), b) may comprise the type "OCTET STRING". In some embodiments the above listed additional IE c) may comprise the type "ENUMERATED {split}".

In some embodiments at least one of the above listed additional IEs a), b), c) may comprise a Criticality of type "Yes" and/or an Assigned Criticality of type "reject".

In some embodiments, the functionality of the apparatus according to the embodiments may be, at least logically, split, and may e.g. be associated with a gNB-CU and/or the at least one gNB-DU.

Further embodiments relate to an apparatus, comprising at least one processor, and at least one memory storing instructions, the at least one memory and the instructions configured to, with the at least one processor, cause a central unit of a base station, e.g. gNB-CU, e.g. gNB-CU-CP, to receive a first information, which characterizes at least one of a) a position of a user equipment establishing access to the base station relative to at least one component of the base station, b) radio conditions experienced by the user equipment, from at least one distributed unit of the base station, and to determine, based on the received first information, whether to perform a single phase configuration or a multi-phase configuration for the user equipment.

Further embodiments relate to an apparatus, comprising at least one processor, and at least one memory storing instructions, the at least one memory and the instructions configured to, with the at least one processor, cause at least one distributed unit of a base station, e.g. gNB-DU, to receive a setup request from a user equipment establishing access to the base station, to determine a first information, which characterizes at least one of a) a position of the user equipment relative to at least one component of the base station, b) radio conditions experienced by the user equipment, based on the setup request, and to transmit the first information to a central unit of the base station, e.g. gNB-CU, e.g. gNB-CU-CP.

Further embodiments relate to a method comprising: determining, by a base station, e.g. gNB, e.g. gNB-DU and/or gNB-CU, a first information which characterizes at least one of a) a position of a user equipment establishing access to the base station relative to at least one component of the base station, b) radio conditions experienced by the user equipment, and determining, based on the first information, whether to perform a single phase configuration or a multi-phase configuration for the user equipment.

Further embodiments relate to a method comprising: receiving, by a central unit of a base station, e.g. gNB-CU, e.g. gNB-CU-CP, a first information, which characterizes at least one of a) a position of a user equipment establishing access to the base station relative to at least one component of the base station, b) radio conditions experienced by the user equipment, from at least one distributed unit of the base station, and determining, based on the received first information, whether to perform a single phase configuration or a multi-phase configuration for the user equipment.

Further embodiments relate to a method comprising: receiving, by at least one distributed unit of a base station, e.g. gNB-DU, a setup request from a user equipment establishing access to the base station, e.g. gNB, determining, by the at least one distributed unit, a first information, which characterizes at least one of a) a position of the user equipment relative to at least one component of the base station, b) radio conditions experienced by the user equipment, based on the setup request, and transmitting, by the at least one distributed unit, the first information to a central unit, e.g. gNB-CU, e.g. gNB-CP, of the base station.

Further embodiments relate to an apparatus comprising means for causing a base station, e.g. gNB, e.g. gNB-DU and/or gNB-CU, e.g. gNB-CU-CP, to determine a first information which characterizes at least one of a) a position of a user equipment establishing access to the base station relative to at least one component of the base station, b) radio conditions experienced by the user equipment, and to determine, based on the first information, whether to perform a single phase configuration or a multi-phase configuration for the user equipment.

In some embodiments, the means for causing the base station to perform the steps of determining the first information and/or to determine, based on the first information, whether to perform a single phase configuration or a multi-phase configuration for the user equipment, may e.g. comprise at least one processor, and at least one memory storing instructions, the at least one memory and the instructions configured to, with the at least one processor, perform said steps.

Further embodiments relate to a wireless communications system comprising at least one base station and at least one apparatus according to the embodiments.

### Brief Description of the Figures

- Fig. 1A: schematically depicts a simplified block diagram of an apparatus according to some embodiments,
- Fig. 1B: schematically depicts a simplified block diagram of an apparatus according to some embodiments,
- Fig. 2A: schematically depicts a simplified block diagram according to some embodiments,
- Fig. 2B: schematically depicts a simplified block diagram according to some embodiments,
- Fig. 3A: schematically depicts a simplified flow chart according to some embodiments,
- Fig. 3B: schematically depicts a simplified flow chart according to some embodiments,
- Fig. 4A: schematically depicts a simplified flow chart according to some embodiments,
- Fig. 4B: schematically depicts a simplified flow chart according to some embodiments,
- Fig. 4C: schematically depicts a simplified flow chart according to some embodiments,
- Fig. 5: schematically depicts a simplified flow chart according to some embodiments, and
- Fig. 6: schematically depicts a simplified block diagram according to some embodiments.

### Description of Some Exemplary Embodiments

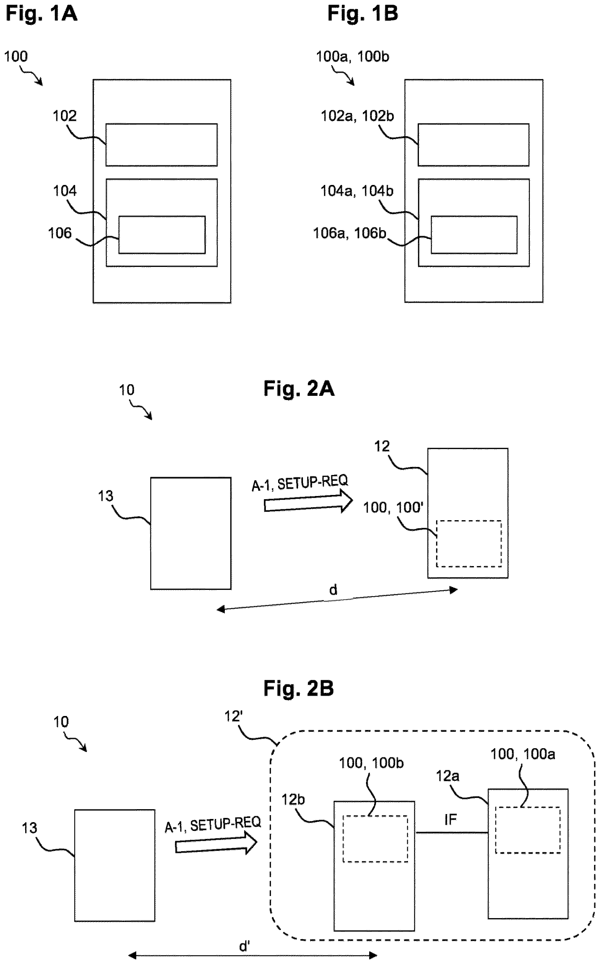

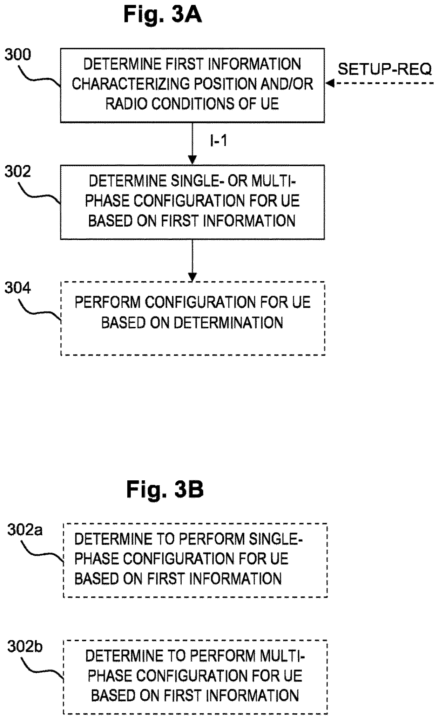

Some embodiments relate to an apparatus, e.g. for a base station 12 (Fig. 2A) of a wireless communications system 10. Fig. 1A schematically depicts a simplified block diagram of the apparatus 100 according to some embodiments, and Fig. 3A schematically depicts a simplified flow chart of a method of operating the apparatus 100 according to some embodiments.

The apparatus 100 (Fig. 1A) comprises at least one processor 102, and at least one memory 104 storing instructions 106, the at least one memory 104 and the instructions 106 configured to, with the at least one processor 102, cause a base station 12 to determine 300 (Fig. 3A) a first information I-1 which characterizes at least one of a) a position of a user equipment 13 (Fig. 2A) establishing access A-1 to the base station 12 relative to at least one component of the base station 12, b) radio conditions experienced by a user equipment 13, and to determine 302 (Fig. 3A), based on the first information I-1, whether to perform a single phase configuration or a multi-phase configuration for the user equipment 13. In some embodiments, this enables to flexibly adapt the configuration for the user equipment 13 based on e.g. the first information I-1.

In some embodiments, the apparatus 100 (Fig. 1A) may be an apparatus for a wireless communications system 10.

In some embodiments, the apparatus 100 or its functionality, respectively, may be provided in a network element of the communications systems, for example in a the base station 12, e.g. a gNodeB (gNB) 12.

In some embodiments, the apparatus 100 according to the embodiments or its functionality, respectively, may be used for or within wireless communications systems 10, e.g. networks, based on or at least partially adhering to third generation partnership project, 3GPP, radio standards such as 5G (fifth generation) or other radio access technology.

In some embodiments, the instructions 106 (Fig. 1A), when executed by the at least one processor 102, further cause the base station 12 to determine 302 the first information I-1 based on a setup request, e.g. connection setup request, SETUP-REQ (Fig. 2A, 3A) from the user equipment.

In some embodiments, the instructions 106, when executed by the at least one processor 102, further cause the base station 12 to individually determine the first information I-1 and/or whether to perform a single phase configuration or a multi-phase configuration for a specific user equipment 13, e.g. based on the connection setup request SETUP-REQ of the specific user equipment 13. In other words, according to some embodiments, the base station 12 may provide for a UE-specific type of configuration (e.g., single-phase or multi-phase, e.g. two-phase), e.g. based on individual criteria such as the first information I-1 or characterized by the first information I-1.In some embodiments, this enables to flexibly and dynamically (e.g., during operation of the base station 12) adapt the type of configuration for a (newly) accessing user equipment 13 based on individual operating conditions of the respective user equipment 13.

In some embodiments, the individual operating conditions of a user equipment 13 (Fig. 2A) may comprise and/or characterize at least one of: a) position of the user equipment 13 with respect to the base station 12 and/or a component (e.g., remote radio head (RRH) or the like) of the base station 12 (e.g., distance d between the user equipment 13 and the base station 12 or at least one component of the base station such as an RRH), b) radio conditions experienced by the user equipment 13 (e.g. characterized by a signal-to-noise ratio (SNR)), c) modulation and coding scheme (MCS).

In some embodiments, a timing advance (TA) value and/or an estimation of the TA value, e.g. based on a preamble transmitted by the user equipment 13 to the base station 12 in an uplink transmission during initial access A-1, e.g. a random access channel (RACH) preamble value belonging to a particular range, of the user equipment 13, may be used to determine a relative position of the user equipment 13 with respect to the (component of) the base station 12 and/or other radio parameters which are indicative of the distance d between the user equipment 13 and the (component of) the base station 12.

In some embodiments, a comparatively high sampling rate may be used for processing such (RACH) preamble of the user equipment 13, to increase a precision of the TA estimation. In some embodiments, an estimated distance d between the user equipment 13 and the base station 12 and/or a component (e.g., RRH) of the base station 12 may, optionally together with a parameter characterizing radio conditions (e.g., SNR, RSRP (Reference Signal Received Power), etc.), be employed to determine if the user equipment 13 is closer to a base station (or RRH), e.g. a center of a radio cell (not shown) as provided by the base station 12 (or its RRH), or if it is further away, e.g. at a cell edge.

In some embodiments, the user equipment 13 may be classified into one of at least two classes characterizing the distance d between the position of the user equipment 13 and the base station 12 (or its RRH), and the first information I-1 may e.g. comprise and/or characterize (e.g., amongst others) this classification.

In some embodiments, the first information I-1 may comprise (e.g., only) one bit, e.g. indicating whether the user equipment 13 is associated with a first class comprising user equipment closer to a cell center than to a cell edge, or with a second class comprising user equipment closer to the cell edge than to the cell center of the radio cell. In some embodiments, the user equipment 13 may determine the class it belongs to, based on the experienced RSRP threshold in the given location. In some embodiments, based on this first information, the base station 12 may determine whether to perform a single-phase or multi-phase, e.g. two-phase, configuration for the user equipment 13.

In some embodiments, the instructions 106, when executed by the at least one processor 102, further cause the base station 12 to a) determine 302a (Fig. 3B) to perform a single-phase configuration for the user equipment 13 if at least one of the following criteria is satisfied: aa) a distance d between the user equipment 13 and the at least one component of the base station 12 is below a first threshold, bb) the radio conditions (e.g., as may be characterized by the SNR and/or another suitable parameter) experienced by the user equipment 13 exceed a second threshold, cc) a complexity of a target modulation and coding scheme associated with the user equipment 13 exceeds a third threshold. In some embodiments, in these cases it may be concluded that a single-phase configuration of a specific user equipment 13 may be more efficient than a multi-phase configuration.

In some embodiments, the instructions 106, when executed by the at least one processor 102, further cause the base station 12 to a) determine 302b to perform a multi-phase configuration, for example a two-phase configuration, for the user equipment 13 if at least one of the following criteria is satisfied: aa) the distance d between the user equipment 13 and the at least one component of the base station 12 exceeds the first threshold, bb) the radio conditions experienced by the user equipment 13 are below the second threshold, cc) a complexity of a target modulation and coding scheme associated with the user equipment 13 is below the third threshold. In some embodiments, in these cases it may be concluded that a multi-phase, e.g. two-phase, configuration of a specific user equipment 13 may be more efficient than a single-phase configuration.

In some embodiments, the instructions 106, when executed by the at least one processor 102, further cause the base station 12 to perform 304 (Fig. 3A) the configuration for the user equipment 13 based on the determination 302 whether to perform a single phase configuration or a multi-phase configuration for the user equipment 13.

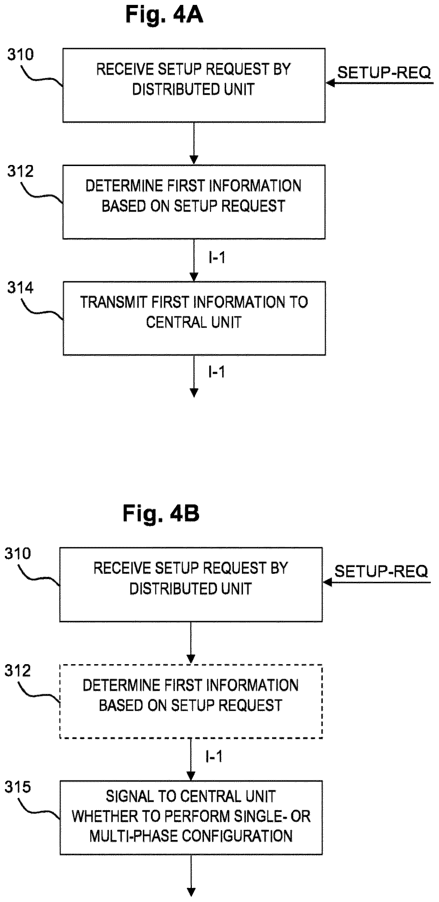

In some embodiments, see for example Fig. 2B, the base station 12' comprises a central unit 12a and at least one distributed unit 12b, wherein the instructions 106 (Fig. 1A), when executed by the at least one processor 102, cause the at least one distributed unit 12b to receive 310 (Fig. 4A) a setup request SETUP-REQ from the user equipment 13, to determine 312 the first information I-1 based on the setup request SETUP-REQ, and to transmit 314 the first information I-1 to the central unit 12a.

In some embodiments, the base station 12' may be a base station for a 5G network, e.g. a gNB 12'. In some embodiments, the gNB 12' may e.g. be split, e.g. at least regarding its logical architecture, into a central unit (CU or gNB-CU) 12a and at least one distributed unit (DU or gNB-DU) 12b. As an example, in some embodiments, the at least one DU 12b may e.g. comprise or represent an RRH.

In some embodiments, the connection setup request SETUP-REQ from the user equipment 13 may be a connection setup request SETUP-REQ according to some accepted specification, e.g. a Radio Resource Control (RRC) setup request.

In some embodiments, the distributed unit 12b may use an interface IF according to some accepted specification, e.g. an F1 interface, for transmitting the first information I-1 to the central unit 12a.

In some embodiments, the distributed unit 12b may use a protocol according to some accepted specification, e.g. an F1 Application Protocol (F1AP), for transmitting the first information I-1 to the central unit 12a.

In some embodiments, the instructions 106 (Fig. 1A), when executed by the at least one processor 102, cause the at least one distributed unit 12b to receive, Fig. 4B, a setup request SETUP-REQ (e.g., RRC setup request) from the user equipment 13 and to signal 315 (e.g., over the F1 interface IF and/or using e.g. the F1AP) to the central unit 12a whether to perform a single phase configuration or a multi-phase configuration for the user equipment based on the setup request SETUP-REQ.

Optionally, in some embodiments, the distributed unit 12b may determine 312 the first information I-1, e.g. based on the received setup request SETUP-REQ. Optionally, in some embodiments, the distributed unit 12b may perform the signaling 315 based on the first information I-1. In some embodiments, the signaling may comprise the first information I-1.

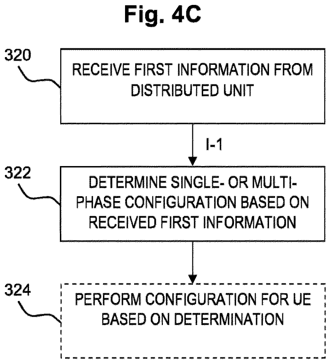

In some embodiments, Fig. 4C, the instructions 106, when executed by the at least one processor 102, further cause the central unit 12a (Fig. 2B) to receive 320 (Fig. 4C) the first information I-1 (and/or the signaling) from the at least one distributed unit 12b, and to determine 322, based on the received first information I-1 (and/or based on the signaling), whether to perform 324 a single phase configuration or a multi-phase configuration for the user equipment 13.

In some embodiments, e.g. when the distributed unit 12b (e.g., gNB-DU 12b) receives an RRC setup request message SETUP-REQ from a user equipment 13, the gNB-DU 12b may detect a radio condition experienced by the user equipment 13 and may e.g. signal assistance information, e.g. based on the detected radio condition, to the central unit 12a, e.g. gNB-CU, e.g. a gNB-CU-Control Plane (gNB-CU-CP). In some embodiments, the assistance information may comprise and/or characterize the first information I-1 according to the embodiments.

In other words, in some embodiments, the gNB-DU 12b may share the first information I-1, e.g. assistance information, with the gNB-CU 12a, e.g. with the gNB-CU-CP, e.g. over the F1 interface IF.

In some embodiments, the gNB-DU 12b may signal (see e.g. block 315 of Fig. 4B) to the gNB-CU 12a, e.g. to the gNB-CU-CP, to use a one-phase configuration for the user equipment. In some embodiments, after receipt of this signaling, the gNB may use the one-phase configuration for the user equipment 13, e.g. encoding and signaling a corresponding setup message to the user equipment 13, e.g. an RRC SETUP message.

In some embodiments, the gNB-DU 12b may signal 315 to the gNB-CU 12a, e.g. to the gNB-CU-CP, to use a multi-phase, e.g. two-phase, configuration for the user equipment 13. In some embodiments, after receipt of this signaling, the gNB may use the multi-phase, e.g. two-phase, configuration for the user equipment 13, e.g. encoding and signaling a corresponding setup message and at least one further message to the user equipment, e.g. an RRC SETUP message and an RRC Reconfiguration message.

In some embodiments, an accepted specification, e.g. the FLAP specification, may be enhanced, e.g. to introduce the first information I-1, e.g. assistance information, e.g. in the form of one or more additional, e.g. optional, information elements (IEs).

In some embodiments, e.g. for a one-phase configuration, a legacy IE may be used, e.g. a CellGroupConfig IE.

In some embodiments, one or more new, e.g. additional, IEs may be included in an F1 message, e.g. in an F1: "INITIAL UL RRC MESSAGE TRANSFER" message, e.g. according to 3GPP TS 38.473 (see for example 3GPP TS 38.473, version 15.3.0 Release 15 chapter 9.2.3.1). In some embodiments, the additional information elements may e.g. comprise:
a) a first additional IE, e.g. "CellGroupConfig-MinConfig", which may e.g. be included with minimum CellGroupConfig, which may for example be used by the CU-CP, e.g. to encode an RRC SETUP message,
b) a second additional IE, e.g. "CellGroupConfig-Remaining", which may be included with remaining CellGroupConfig (information), which may e.g. be used by the CU-CP, e.g. to encode an RRC RECONFIGURATION message.
c) a third additional IE, e.g. "ConfigOptionIndication", which may e.g. be a flag (e.g. bit flag) which indicates a recommended configuration, e.g. whether to use one-phase configuration or multi-phase, e.g. two-phase, configuration.

In some embodiments at least some of the above listed additional IEs a), b), c) may e.g. be included in the F1: INITIAL UL RRC MESSAGE TRANSFER message.

In some embodiments at least some of the above listed additional IEs a), b), c) may be optional.

In some embodiments at least one of the above listed additional IEs a), b), c) may be included (e.g. in the INITIAL UL RRC MESSAGE TRANSFER message), e.g. transmitted to the gNB-CU 12a, if the gNB-DU 12b determines to use multi-phase, e.g. two-phase, configuration.

In some embodiments the above listed additional IEs a), b) may comprise the type "OCTET STRING". In some embodiments the above listed additional IE c) may comprise the type "ENUMERATED {split}".

In some embodiments at least one of the above listed additional IEs a), b), c) may comprise a Criticality of type "Yes" and/or an Assigned Criticality of type "reject".

In some embodiments, the functionality of the apparatus 100 (Fig. 1A) according to the embodiments may be, at least logically, split, see for example the blocks 100 of Fig. 2B exemplarily assigned to the CU 12a and the DU 12b, and may e.g. be associated with a gNB-CU 12a and/or the at least one gNB-DU 12b.

In some embodiments, the functionality of the apparatus 100 (Fig. 1A) according to the embodiments may be implemented by different apparatus 100a, 100b (Fig. 1B) as explained hereinafter, wherein the apparatus 100a may e.g. be associated with the gNB-CU 12a (Fig. 2B), and wherein the apparatus 100b may e.g. be associated with the gNB-DU 12b.

Further embodiments relate to an apparatus 100a (Fig. 1B), comprising at least one processor 102a, and at least one memory 104a storing instructions 106a, the at least one memory 104a and the instructions 106a configured to, with the at least one processor 102a, cause a central unit 12a of a base station, e.g. gNB-CU, e.g. gNB-CU-CP, to receive 320 (Fig. 4C) a first information I-1, which characterizes at least one of a) a position of a user equipment 13 establishing access to the base station 12, 12' relative to at least one component 12b of the base station (e.g., characterizing a distance d' between the user equipment 13 and the gNB-DU 12b), b) radio conditions experienced by the user equipment 13, from at least one distributed unit 12b of the base station 12', and to determine 322, based on the received first information I-1 (and/or a corresponding signaling), whether to perform 324 a single phase configuration or a multi-phase configuration for the user equipment 13.

In some embodiments, the apparatus 100a is further configured to cause the gNB 12, 12' to perform further aspects of a method according to the embodiments explained above associated with the gNB-CU 12a.

Further embodiments, Fig. 1B, relate to an apparatus 100b, comprising at least one processor 102b, and at least one memory 104b storing instructions 106b, the at least one memory 104b and the instructions 106b configured to, with the at least one processor 102b, cause at least one distributed unit 12b (Fig. 2B) of a base station 12', e.g. gNB-DU, to receive 310 (Fig. 4A) a setup request SETUP-REQ from a user equipment 13 establishing access to the base station 12', to determine 312 a first information I-1, which characterizes at least one of a) a position of the user equipment relative to at least one component of the base station, b) radio conditions experienced by the user equipment, based on the setup request SETUP-REQ, and to transmit 314 the first information I-1 to a central unit 12a of the base station, e.g. gNB-CU, e.g. gNB-CU-CP.

In some embodiments, alternatively or additionally to determining 312 the first information I-1, the gNB-DU 12b may determine whether the gNB 12' should perform a single-phase configuration or a multi-phase configuration for the user equipment 13, and may signal a result of this determination 312 to the gNB-CU 12a, e.g. within block 314.

In some embodiments, such signaling may be performed implicitly or explicitly, e.g. by including one or more information elements into a message to be transmitted to the gNB-CU 12a, e.g. at least one of the exemplarily disclosed IEs a) "CellGroupConfig-MinConfig", b) "CellGroupConfig-Remaining", c) "ConfigOptionIndication".

Further embodiments, Fig. 3A, relate to a method comprising: determining 300, by a base station 12, 12', e.g. gNB, e.g. gNB-DU and/or gNB-CU, a first information I-1 which characterizes at least one of a) a position of a user equipment establishing access to the base station relative to at least one component of the base station, b) radio conditions experienced by the user equipment, and determining 302, based on the first information I-1, whether to perform a single phase configuration or a multi-phase configuration for the user equipment 13.

Further embodiments, Fig. 4C, relate to a method comprising: receiving 320, by a central unit 12a of a base station 12, 12', e.g. gNB-CU, e.g. gNB-CU-CP, a first information I-1, which characterizes at least one of a) a position of a user equipment establishing access to the base station relative to at least one component of the base station, b) radio conditions experienced by the user equipment, from at least one distributed unit 12b of the base station 12, 12', and determining 322, based on the received first information I-1, whether to perform 324 a single phase configuration or a multi-phase configuration for the user equipment.

Further embodiments, Fig. 4A, relate to a method comprising: receiving 310, by at least one distributed unit, e.g. gNB-DU, 12b of a base station 12, 12' a setup request SETUP-REQ from a user equipment 13 establishing access to the base station, e.g. gNB, determining 312, by the at least one distributed unit 12b, a first information I-1, which characterizes at least one of a) a position of the user equipment relative to at least one component of the base station, b) radio conditions experienced by the user equipment, based on the setup request SETUP-REQ, and transmitting 314, by the at least one distributed unit 12b, the first information I-1 to a central unit 12a, e.g. gNB-CU, e.g. gNB-CP, of the base station.

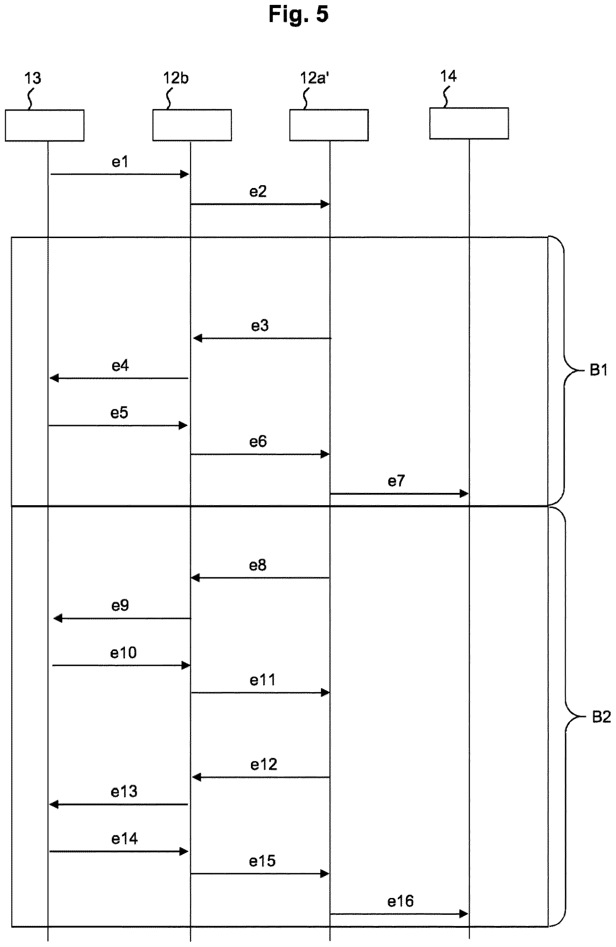

Fig. 5 schematically depicts a simplified flow chart according to some embodiments, which exemplarily depicts a one (i.e., single)-phase and two-phase (re)configuration process as alternatives within respective blocks B1 (one-phase), B2 (two-phase).

The elements 12b, 13 of Fig. 5 correspond with the elements 12b, 13 as exemplarily explained above with respect e.g. to Fig. 2B. Element 12a' of Fig. 5 symbolizes a gNB-CU-CP, and element 14 of Fig. 4 symbolizes an Access and Mobility Management Function (AMF).

Element e1 symbolizes an RRC setup request message transmitted from the user equipment 13 to the gNB-DU 12b, e.g. in the course of an initial access A-1 to the network 10 (Fig. 2B) according to some embodiments. Element e2 symbolizes an initial uplink RRC message transfer, e.g. using the FLAP, via the F1 interface IF (Fig. 2B), from the gNB-DU 12b to the gNB-CU-CP 12a'.

For the exemplary one-phase configuration according to block B1 of Fig. 5, element e3 symbolizes a downlink RRC message transfer from the gNB-CU-CP 12a' to the gNB-DU 12b. Element e4 symbolizes an RRC setup message, element e5 symbolizes an RRC setup complete message, element e6 symbolizes an INITIAL UL RRC MESSAGE TRANSFER from the gNB-DU 12b to the gNB-CU-CP 12a', and element e7 symbolizes an initial user equipment message, e.g. according to a next generation application protocol, NGAP, to the AMF 14.

In some embodiments, a one stage message exchange with the user equipment 13 characterizing the single phase configuration comprises e.g. the elements e4, e5, as seen from the gNB-DU's perspective.

For the exemplary two-phase configuration according to block B2 of Fig. 5, element e8 symbolizes a downlink (DL) RRC message transfer from the gNB-CU-CP 12a' to the gNB-DU 12b. Element e9 symbolizes an RRC setup message, element e10 symbolizes an RRC setup complete message, element e11 symbolizes an INITIAL UL RRC MESSAGE TRANSFER from the gNB-DU 12b to the gNB-CU-CP 12a'. Element e12 symbolizes a further DL RRC message transfer from the gNB-CU-CP 12a' to the gNB-DU 12b, element e13 symbolizes an RRC reconfiguration message, element e14 symbolizes an RRC configuration complete message, element e15 symbolizes a further INITIAL UL RRC MESSAGE TRANSFER from the gNB-DU 12b to the gNB-CU-CP 12a', and element e16 symbolizes an initial user equipment message, e.g. according to a the NGAP, to the AMF 14.

In some embodiments, a two stage message exchange with the user equipment 13 characterizing the multi-, e.g. two-phase configuration, comprises e.g. the elements e9, e10 and e13, e14, as seen from the gNB-DU's perspective.

As can be seen from Fig. 5, in some embodiments, a conventional F1: UE Context Modification Procedure message, which may e.g. be initiated by a conventional gNB-DU in case of a two-phase configuration, is not used according to the embodiments.

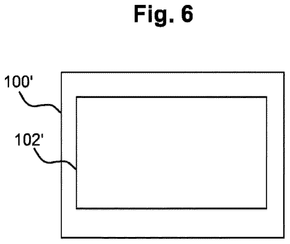

Further embodiments, Fig. 6, relate to an apparatus 100' comprising means 102' for causing a base station 12, 12', e.g. gNB, e.g. gNB-DU and/or gNB-CU, e.g. gNB-CU-CP, to determine a first information I-1 which characterizes at least one of a) a position of a user equipment establishing access to the base station relative to at least one component of the base station, b) radio conditions experienced by the user equipment, and to determine, based on the first information I-1, whether to perform a single phase configuration or a multi-phase configuration for the user equipment 13.

In some embodiments, the means 102' for causing the base station 12, 12' to perform the steps of determining the first information and/or to determine, based on the first information, whether to perform a single phase configuration or a multi-phase configuration for the user equipment, may e.g. comprise at least one processor 102 (Fig. 1A), and at least one memory 104 storing instructions 106, the at least one memory 104 and the instructions 106 configured to, with the at least one processor 102, perform said steps.

Further embodiments relate to a wireless communications system 10 (Fig. 2A, 2B) comprising at least one base station 12, 12' and at least one apparatus 100, 100a, 100b, 100' according to the embodiments.

At least some embodiments may at least temporarily attain at least one of the following effects and/or advantages: a) user equipment's initial access A-1 has a higher probability of success, b) optimized resource utilization on the base station (e.g., gNB) side, c) base station 12, 12' may individually, e.g. per user equipment 13, select whether to use a single-phase (i.e., one-phase) configuration or a multi-phase (e.g., two-phase) configuration.

## Claims

1. An apparatus (100), comprising at least one processor (102), and at least one memory (104) storing instructions (106), the at least one memory (104) and the instructions (106) configured to, with the at least one processor (102), cause a base station (12; 12') to determine (300) a first information (I-1) which characterizes at least one of a) a position of a user equipment (13) establishing access (A-1) to the base station (12; 12') relative to at least one component (12; 12b) of the base station (12; 12'), b) radio conditions experienced by a user equipment (13), and to determine (302), based on the first information (I-1), whether to perform (304) a single phase configuration or a multi-phase configuration for the user equipment (13).

2. The apparatus (100) according to claim 1, wherein the instructions (106), when executed by the at least one processor (102), further cause the base station (12; 12') to determine (300) the first information (I-1) based on a setup request (SETUP-REQ) from the user equipment (13).

3. The apparatus (100) according to at least one of the preceding claims, wherein the instructions (106), when executed by the at least one processor (102), further cause the base station (12; 12') to a) determine (302a) to perform the single phase configuration for the user equipment (13) if at least one of the following criteria is satisfied: aa) radio parameters indicative of a distance (d; d') between the user equipment (13) and the at least one component (12, 12b) of the base station (12; 12') is below a first threshold, bb) the radio conditions experienced by the user equipment (13) exceed a second threshold, cc) a complexity of a target modulation and coding scheme associated with the user equipment (13) exceeds a third threshold.

4. The apparatus (100) according to at least one of the preceding claims, wherein the instructions (106), when executed by the at least one processor (102), further cause the base station (12; 12') to a) determine (302b) to perform a multi-phase configuration, for example a two-phase configuration, for the user equipment (13) if at least one of the following criteria is satisfied: aa) radio parameters indicative of a distance (d; d') between the user equipment (13) and the at least one component (12, 12b) of the base station (12; 12') exceeds a or the first threshold, bb) the radio conditions experienced by the user equipment (13) are below a or the second threshold, cc) a complexity of a target modulation and coding scheme associated with the user equipment (13) is below a or the third threshold.

5. The apparatus (100) according to at least one of the preceding claims, wherein the instructions (106), when executed by the at least one processor (102), further cause the base station (12; 12') to perform (304) the configuration for the user equipment (13) based on the determination (302) whether to perform the single phase configuration or the multi-phase configuration for the user equipment (13).

6. The apparatus (100) according to at least one of the preceding claims, wherein the base station (12; 12') comprises a central unit (12a) and at least one distributed unit (12b), wherein the instructions (106), when executed by the at least one processor (102), cause the at least one distributed unit (12b) to receive (310) a setup request (SETUP-REQ) from the user equipment (13), to determine (312) the first information (I-1) based on the setup request (SETUP-REQ), and to transmit (314) the first information (I-1) to the central unit (12a).

7. The apparatus (100) according to at least one of the preceding claims, wherein the base station (12; 12') comprises a central unit (12a) and at least one distributed unit (12b), wherein the instructions (106), when executed by the at least one processor (102), cause the at least one distributed unit (12b) to receive (310) a setup request (SETUP-REQ) from the user equipment (13) and to signal (315) to the central unit (12a) whether to perform the single phase configuration or the multi-phase configuration for the user equipment (13) based on the setup request (SETUP-REQ) .

8. The apparatus (100) according to at least one of the claims 6 to 7, wherein the instructions (106), when executed by the at least one processor (102), further cause the central unit (12a) to receive (320) the first information (I-1) from the at least one distributed unit (12b), and to determine (322), based on the received first information (I-1), whether to perform (324) the single phase configuration or the multi-phase configuration for the user equipment (13).

9. An apparatus (100a), comprising at least one processor (102a), and at least one memory (104a) storing instructions (106a), the at least one memory (104a) and the instructions (106a) configured to, with the at least one processor (102a), cause a central unit (12a) of a base station (12; 12') to receive (320) a first information (I-1), which characterizes at least one of a) a position of a user equipment (13) establishing access (A-1) to the base station (12; 12') relative to at least one component (12b) of the base station (12), b) radio conditions experienced by the user equipment (13), from at least one distributed unit (12b) of the base station (12; 12'), and to determine (322), based on the received first information (I-1), whether to perform (324) a single phase configuration or a multi-phase configuration for the user equipment (13).

10. An apparatus (100b), comprising at least one processor (102b), and at least one memory (104b) storing instructions (106b), the at least one memory (104b) and the instructions (106b) configured to, with the at least one processor (102b), cause at least one distributed unit (12b) of a base station (12') to receive (310) a setup request (SETUP-REQ) from a user equipment (13) establishing access (A-1) to the base station (12'), to determine (312) a first information (I-1), which characterizes at least one of a) a position of the user equipment (13) relative to at least one component (12b) of the base station (12'), b) radio conditions experienced by the user equipment (13), based on the setup request (SETUP-REQ), and to transmit (314) the first information (I-1) to a central unit (12a) of the base station (12').

11. A method comprising: determining (300), by a base station (12; 12'), a first information (I-1) which characterizes at least one of a) a position of a user equipment (13) establishing access (A-1) to the base station (12; 12') relative to at least one component (12; 12b) of the base station (12; 12'), b) radio conditions experienced by the user equipment (13), and determining (302), based on the first information (I-1), whether to perform a single phase configuration or a multi-phase configuration for the user equipment (13) .

12. A method comprising: receiving (320), by a central unit (12a) of a base station (12; 12'), a first information (I-1), which characterizes at least one of a) a position of a user equipment (13) establishing access (A-1) to the base station (12; 12') relative to at least one component (12b) of the base station (12), b) radio conditions experienced by the user equipment (13), from at least one distributed unit (12b) of the base station (12; 12'), and determining (322), based on the received first information (I-1), whether to perform (324) a single phase configuration or a multi-phase configuration for the user equipment (13).

13. A method comprising: receiving (310), by at least one distributed unit (12b) of a base station (12'), a setup request (SETUP-REQ) from a user equipment (13) establishing access (A-1) to the base station (12'), determining (312), by the at least one distributed unit (12b), a first information (I-1), which characterizes at least one of a) a position of the user equipment (13) relative to at least one component (12b) of the base station (12'), b) radio conditions experienced by the user equipment (13), based on the setup request (SETUP-REQ), and transmitting (314), by the at least one distributed unit (12b), the first information (I-1) to a central unit (12a) of the base station (12').

14. An apparatus (100') comprising means (102') for causing a base station (12; 12') to determine (300) a first information (I-1) which characterizes at least one of a) a position of a user equipment (13) establishing access (A-1) to the base station (12; 12') relative to at least one component (12; 12b) of the base station (12; 12'), b) radio conditions experienced by the user equipment (13), and to determine (302), based on the first information (I-1), whether to perform a single phase configuration or a multi-phase configuration for the user equipment (13).

15. Wireless communications system (10) comprising at least one base station (12, 12') and at least one apparatus (100, 100a, 100b) according to at least one of the claims 1 to 10.

## Patentansprüche

1. Vorrichtung (100), die mindestens einen Prozessor (102) und mindestens einen Speicher (104), in dem Anweisungen (106) gespeichert sind, umfasst, wobei der mindestens eine Speicher (104) und die Anweisungen (106) dazu ausgelegt sind, mit dem mindestens einen Prozessor (102) eine Basisstation (12; 12') zu veranlassen, erste Informationen (I-1) zu bestimmen (300), die mindestens eines von a) einer Position einer Teilnehmereinrichtung (13), die einen Zugriff (A-1) auf die Basisstation (12; 12`) relativ zu mindestens einer Komponente (12; 12b) der Basisstation (12; 12`) herstellt, b) Funkbedingungen, die von einer Teilnehmereinrichtung (13) erfahren werden, charakterisieren, und auf Basis der ersten Informationen (I-1) zu bestimmen (302), ob für die Teilnehmereinrichtung (13) eine einphasige Auslegung oder eine mehrphasige Auslegung durchgeführt (304) werden soll.

2. Vorrichtung (100) nach Anspruch 1, wobei die Anweisungen (106), wenn sie von dem mindestens einen Prozessor (102) ausgeführt werden, die Basisstation (12; 12') ferner veranlassen, auf Basis einer Einrichtungsanforderung (SETUP-REQ) von der Teilnehmereinrichtung (13) die ersten Informationen (I-1) zu bestimmen (300).

3. Vorrichtung (100) nach mindestens einem der vorhergehenden Ansprüche, wobei die Anweisungen (106), wenn sie von dem mindestens einen Prozessor (102) ausgeführt werden, die Basisstation (12; 12') ferner veranlassen, a) zu bestimmen (302a), die einphasige Auslegung für die Teilnehmereinrichtung (13) durchzuführen, wenn mindestens eines der folgenden Kriterien erfüllt ist: aa) Funkparameter, die anzeigen, dass ein Abstand (d; d') zwischen der Teilnehmereinrichtung (13) und der mindestens einen Komponente (12, 12b) der Basisstation (12; 12') unter einem ersten Schwellwert liegt, bb) die von der Teilnehmereinrichtung (13) erfahrenen Funkbedingungen überschreiten einen zweiten Schwellwert, cc) eine Komplexität eines Zielmodulations- und Codierschemas, das mit der Teilnehmereinrichtung (13) verknüpft ist, überschreiten einen dritten Schwellwert.

4. Vorrichtung (100) nach mindestens einem der vorhergehenden Ansprüche, wobei die Anweisungen (106), wenn sie von dem mindestens einen Prozessor (102) ausgeführt werden, die Basisstation (12; 12') ferner veranlassen, a) zu bestimmen (302b), die mehrphasige Auslegung für die Teilnehmereinrichtung (13), beispielsweise eine zweiphasige Auslegung, durchzuführen, wenn mindestens eines der folgenden Kriterien erfüllt ist: aa) Funkparameter, die anzeigen, dass ein Abstand (d; d') zwischen der Teilnehmereinrichtung (13) und der mindestens einen Komponente (12, 12b) der Basisstation (12; 12') einen oder den ersten Schwellwert überschreitet, bb) die von der Teilnehmereinrichtung (13) erfahrenen Funkbedingungen liegen unter einem oder dem zweiten Schwellwert, cc) eine Komplexität eines Zielmodulations- und Codierschemas, das mit der Teilnehmereinrichtung (13) verknüpft ist, liegt unter einem oder dem dritten Schwellwert.

5. Vorrichtung (100) nach mindestens einem der vorhergehenden Ansprüche, wobei die Anweisungen (106), wenn sie von dem mindestens einen Prozessor (102) ausgeführt werden, die Basisstation (12; 12') ferner veranlassen, auf Basis der Bestimmung (302), ob die einphasige Auslegung oder die mehrphasige Auslegung für die Teilnehmereinrichtung (13) durchgeführt werden soll, die Auslegung für die Teilnehmereinrichtung (13) durchzuführen (304).

6. Vorrichtung (100) nach mindestens einem der vorhergehenden Ansprüche, wobei die Basisstation (12; 12') eine Zentraleinheit (12a) und mindestens eine verteilte Einheit (12b) umfasst, wobei die Anweisungen (106), wenn sie von dem mindestens einen Prozessor (102) ausgeführt werden, die mindestens eine verteilte Einheit (12b) veranlassen, eine Einrichtungsanforderung (SETUP-REQ) von der Teilnehmereinrichtung (13) zu empfangen (310), die ersten Informationen (I-1) auf Basis der Einrichtungsanforderung (SETUP-REQ) zu bestimmen (312) und die ersten Informationen (I-1) zur Zentraleinheit (12a) zu übertragen (314).

7. Vorrichtung (100) nach mindestens einem der vorhergehenden Ansprüche, wobei die Basisstation (12; 12') eine Zentraleinheit (12a) und mindestens eine verteilte Einheit (12b) umfasst, wobei die Anweisungen (106), wenn sie von dem mindestens einen Prozessor (102) ausgeführt werden, die mindestens eine verteilte Einheit (12b) veranlassen, eine Einrichtungsanforderung (SETUP-REQ) von der Teilnehmereinrichtung (13) zu empfangen (310) und auf Basis der Einrichtungsanforderung (SETUP-REQ) der Zentraleinheit (12a) zu signalisieren (315), ob die einphasige Auslegung oder die mehrphasige Auslegung für die Teilnehmereinrichtung (13) durchgeführt werden soll.

8. Vorrichtung (100) nach mindestens einem der Ansprüche 6 bis 7, wobei die Anweisungen (106), wenn sie von dem mindestens einen Prozessor (102) ausgeführt werden, die Zentraleinheit (12a) ferner veranlassen, die ersten Informationen (I-1) von der mindestens einen verteilten Einheit (12b) zu empfangen (320) und auf Basis der empfangenen ersten Informationen (I-1) zu bestimmen (322), ob die einphasige Auslegung oder die mehrphasige Auslegung für die Teilnehmereinrichtung (13) durchgeführt (324) werden soll.

9. Vorrichtung (100a), die mindestens einen Prozessor (102a) und mindestens einen Speicher (104a), in dem Anweisungen (106a) gespeichert sind, umfasst, wobei der mindestens eine Speicher (104a) und die Anweisungen (106a) dazu ausgelegt sind, mit dem mindestens einen Prozessor (102a) eine Zentraleinheit (12a) einer Basisstation (12; 12') zu veranlassen, erste Informationen (I-1), die mindestens eines von a) einer Position einer Teilnehmereinrichtung (13), die einen Zugriff (A-1) auf die Basisstation (12; 12`) relativ zu mindestens einer Komponente (12b) der Basisstation (12) herstellt, b) Funkbedingungen, die von der Teilnehmereinrichtung (13) erfahren werden, charakterisieren, von mindestens einer verteilten Einheit (12b) der Basisstation (12; 12') zu empfangen (320) und auf Basis der empfangenen ersten Informationen (I-1) zu bestimmen (322), ob für die Teilnehmereinrichtung (13) eine einphasige Auslegung oder eine mehrphasige Auslegung durchgeführt (324) werden soll.

10. Vorrichtung (100b), die mindestens einen Prozessor (102b) und mindestens einen Speicher (104b), in dem Anweisungen (106b) gespeichert sind, umfasst, wobei der mindestens eine Speicher (104b) und die Anweisungen (106b) dazu ausgelegt sind, mit dem mindestens einen Prozessor (102b) mindestens eine verteilte Einheit (12b) einer Basisstation (12`) zu veranlassen, eine Einrichtungsanforderung (SETUP-REQ) von einer Teilnehmereinrichtung (13), die einen Zugriff (A-1) auf die Basisstation (12`) herstellt, zu empfangen (310), erste Informationen (I-1) zu bestimmen (312), die mindestens eines von a) einer Position der Teilnehmereinrichtung (13) relativ zu mindestens einer Komponente (12b) der Basisstation (12`), b) Funkbedingungen, die von der Teilnehmereinrichtung (13) erfahren werden, auf Basis der Einrichtungsanforderung (SETUP-REQ) charakterisieren, und die ersten Informationen (I-1) zu einer Zentraleinheit (12a) der Basisstation (12') zu übertragen (314).

11. Verfahren, das Folgendes umfasst: Bestimmen (300) durch eine Basisstation (12; 12`) von ersten Informationen (I-1), die mindestens eines von a) einer Position einer Teilnehmereinrichtung (13), die einen Zugriff (A-1) auf die Basisstation (12; 12`) relativ zu mindestens einer Komponente (12; 12b) der Basisstation (12; 12`) herstellt, b) Funkbedingungen, die von der Teilnehmereinrichtung (13) erfahren werden, charakterisieren, und Bestimmen (302) auf Basis der ersten Informationen (I-1), ob für die Teilnehmereinrichtung (13) eine einphasige Auslegung oder eine mehrphasige Auslegung durchgeführt werden soll.

12. Verfahren , das Folgendes umfasst: Empfangen (320) durch eine Zentraleinheit (12a) einer Basisstation (12; 12`) von ersten Informationen (I-1), die mindestens eines von a) einer Position einer Teilnehmereinrichtung (13), die einen Zugriff (A-1) auf die Basisstation (12; 12`) relativ zu mindestens einer Komponente (12b) der Basisstation (12), b) Funkbedingungen, die von der Teilnehmereinrichtung (13) erfahren werden, charakterisieren, von der mindestens einen verteilten Einheit (12b) der Basisstation (12; 12`) und Bestimmen (322) auf Basis der empfangenen ersten Informationen (I-1), ob für die Teilnehmereinrichtung (13) eine einphasige Auslegung oder eine mehrphasige Auslegung durchgeführt (324) werden soll.

13. Verfahren, das Folgendes umfasst: Empfangen (310) einer Einrichtungsanforderung (SETUP-REQ) von einer Teilnehmereinrichtung (13), die einen Zugriff (A-1) auf eine Basisstation (12') herstellt, durch mindestens eine verteilte Einheit (12b) der Basisstation (12'), Bestimmen (312) von ersten Informationen (I-1), die mindestens eines von a) einer Position der Teilnehmereinrichtung (13) relativ zu mindestens einer Komponente (12b) der Basisstation (12'), b) Funkbedingungen, die von der Teilnehmereinrichtung (13) erfahren werden, charakterisieren, durch die mindestens eine verteilte Einheit (12b) auf Basis der Einrichtungsanforderung (SETUP-REQ) und Übertragen (314) der ersten Informationen (I-1) durch die mindestens eine verteilte Einheit (12b) zu einer Zentraleinheit (12a) der Basisstation (12').

14. Vorrichtung (100`), die Mittel (102') zum Veranlassen einer Basisstation (12; 12'), erste Informationen (I-1) zu bestimmen (300), die mindestens eines von a) einer Position einer Teilnehmereinrichtung (13), die einen Zugriff (A-1) auf die Basisstation (12; 12') relativ zu mindestens einer Komponente (12; 12b) der Basisstation (12; 12'), herstellt, b) Funkbedingungen, die von der Teilnehmereinrichtung (13) erfahren werden, und auf Basis der ersten Informationen (I-1) zu bestimmen (302), ob für die Teilnehmereinrichtung (13) eine einphasige Auslegung oder eine mehrphasige Auslegung durchgeführt werden soll, umfasst.

15. Drahtloses Kommunikationssystem (10), das mindestens eine Basisstation (12, 12') und mindestens eine Vorrichtung (100, 100a, 100b) nach mindestens einem der Ansprüche 1 bis 10 umfasst.

## Revendications

1. Appareil (100), comprenant au moins un processeur (102) et au moins une mémoire (104) stockant des instructions (106), l'au moins une mémoire (104) et les instructions (106) étant configurées pour, avec l'au moins un processeur (102), amener une station de base (12 ; 12') à déterminer (300) des premières informations (I-1) qui caractérisent a) une position d'un équipement utilisateur (13) établissant un accès (A-1) à la station de base (12 ; 12') par rapport à au moins un composant (12 ; 12b) de la station de base (12 ; 12') et/ou b) des conditions radio rencontrées par un équipement utilisateur (13), et sur la base des premières informations (I-1), à déterminer (302) s'il faut effectuer (304) une configuration monophasée ou une configuration multiphasée pour l'équipement utilisateur (13).

2. Appareil (100) selon la revendication 1, dans lequel les instructions (106), lorsqu'elles sont exécutées par l'au moins un processeur (102), amènent en outre la station de base (12 ; 12') à déterminer (300) les premières informations (I-1) sur la base d'une demande de paramétrage (SETUP-REQ) de l'équipement utilisateur (13).

3. Appareil (100) selon au moins l'une des revendications précédentes, dans lequel les instructions (106), lorsqu'elles sont exécutées par l'au moins un processeur (102), amènent en outre la station de base (12 ; 12') à a) déterminer (302a) d'effectuer la configuration monophasée pour l'équipement utilisateur (13) si au moins un des critères suivants est satisfait : aa) des paramètres radio indiquent qu'une distance (d ; d') entre l'équipement utilisateur (13) et l'au moins un composant (12, 12b) de la station de base (12 ; 12') est en dessous d'un premier seuil, bb) les conditions radio rencontrées par l'équipement utilisateur (13) dépassent un deuxième seuil, cc) une complexité d'un schéma de modulation et de codage cible associé à l'équipement utilisateur (13) dépasse un troisième seuil.

4. Appareil (100) selon au moins l'une des revendications précédentes, dans lequel les instructions (106), lorsqu'elles sont exécutées par l'au moins un processeur (102), amènent en outre la station de base (12 ; 12') à a) déterminer (302b) d'effectuer une configuration multiphasée, par exemple une configuration à deux phases, pour l'équipement utilisateur (13) si au moins un des critères suivants est satisfait : aa) des paramètres radio indiquent qu'une distance (d ; d') entre l'équipement utilisateur (13) et l'au moins un composant (12, 12b) de la station de base (12 ; 12') dépasse un ou le premier seuil, bb) les conditions radio rencontrées par l'équipement utilisateur (13) sont en dessous d'un ou du deuxième seuil, cc) une complexité d'un schéma de modulation et de codage cible associé à l'équipement utilisateur (13) est en dessous d'un ou du troisième seuil.

5. Appareil (100) selon au moins l'une des revendications précédentes, dans lequel les instructions (106), lorsqu'elles sont exécutées par l'au moins un processeur (102), amènent en outre la station de base (12 ; 12') à effectuer (304) la configuration pour l'équipement utilisateur (13) en déterminant (302) s'il faut effectuer la configuration monophasée ou la configuration multiphasée pour l'équipement utilisateur (13).

6. Appareil (100) selon au moins l'une des revendications précédentes, dans lequel la station de base (12 ; 12') comprend une unité centrale (12a) et au moins une unité distribuée (12b), dans lequel les instructions (106), lorsqu'elles sont exécutées par l'au moins un processeur (102), amènent l'au moins une unité distribuée (12b) à recevoir (310) une demande de paramétrage (SETUP-REQ) de l'équipement utilisateur (13), à déterminer (312) les premières informations (I-1) et sur la base de la demande de paramétrage (SETUP-REQ), à transmettre (314) les premières informations (I-1) à l'unité centrale (12a).

7. Appareil (100) selon au moins l'une des revendications précédentes, dans lequel la station de base (12 ; 12') comprend une unité centrale (12a) et au moins une unité distribuée (12b), dans lequel les instructions (106), lorsqu'elles sont exécutées par l'au moins un processeur (102), amènent l'au moins une unité distribuée (12b) à recevoir (310) une demande de paramétrage (SETUP-REQ) de l'équipement utilisateur (13) et à signaler (315) à l'unité centrale (12a) s'il faut effectuer la configuration monophasée ou la configuration multiphasée pour l'équipement utilisateur (13) sur la base de la demande de paramétrage (SETUP-REQ).

8. Appareil (100) selon au moins l'une des revendications 6 et 7, dans lequel les instructions (106), lorsqu'elles sont exécutées par l'au moins un processeur (102), amènent en outre l'unité centrale (12a) à recevoir (320) les premières informations (I-1) de l'au moins une unité distribuée (12b), et à déterminer (322), sur la base des premières informations (I-1) reçues, s'il faut effectuer (324) la configuration monophasée ou la configuration multiphasée pour l'équipement utilisateur (13).

9. Appareil (100a) comprenant au moins un processeur (102a) et au moins une mémoire (104a) stockant des instructions (106a), l'au moins une mémoire (104a) et les instructions (106a) étant configurées pour, avec l'au moins un processeur (102a), amener une unité centrale (12a) d'une station de base (12 ; 12') à recevoir (320) des premières informations (I-1) qui caractérisent a) une position d'un équipement utilisateur (13) établissant un accès (A-1) à la station de base (12 ; 12') par rapport à au moins un composant (12b) de la station de base (12), et/ou b) des conditions radio rencontrées par l'équipement utilisateur (13) d'au moins une unité distribuée (12b) de la station de base (12 ; 12'), et sur la base des premières informations (I-1) reçues, à déterminer (322) s'il faut effectuer (324) une configuration monophasée ou une configuration multiphasée pour l'équipement utilisateur (13).

10. Appareil (100b), comprenant au moins un processeur (102b) et au moins une mémoire (104b) stockant des instructions (106b), l'au moins une mémoire (104b) et les instructions (106b) étant configurées pour, avec l'au moins un processeur (102b), amener au moins une unité distribuée (12b) d'une station de base (12') à recevoir (310) une demande de paramétrage (SETUP-REQ) d'un équipement utilisateur (13) établissant un accès (A-1) à la station de base (12'), à déterminer (312) des premières informations (I-1) qui caractérisent a) une position de l'équipement utilisateur (13) par rapport à au moins un composant (12b) de la station de base (12') et/ou b) des conditions radio rencontrées par l'équipement utilisateur (13), et sur la base de la demande de paramétrage (SETUP-REQ), à transmettre (314) les premières informations (I-1) à une unité centrale (12a) de la station de base (12').

11. Procédé comprenant les étapes suivantes : déterminer (300), par une station de base (12 ; 12'), des premières informations (I-1) qui caractérisent a) une position d'un équipement utilisateur (13) établissant un accès (A-1) à la station de base (12 ; 12') par rapport à au moins un composant (12 ; 12b) de la station de base (12 ; 12'), et/ou b) des conditions radio rencontrées par l'équipement utilisateur (13), et sur la base des premières informations (I-1), déterminer (302) s'il faut effectuer une configuration monophasée ou une configuration multiphasée pour l'équipement utilisateur (13).

12. Procédé comprenant les étapes suivantes : recevoir (320), par une unité centrale (12a) d'une station de base (12 ; 12'), des premières informations (I-1) qui caractérisent a) une position d'un équipement utilisateur (13) établissant un accès (A-1) à la station de base (12 ; 12') par rapport à au moins un composant (12b) de la station de base (12), et/ou b) des conditions radio rencontrées par l'équipement utilisateur (13) d'au moins une unité distribuée (12b) de la station de base (12 ; 12'), et sur la base des premières informations (I-1) reçues, déterminer (322) s'il faut effectuer (324) une configuration monophasée ou une configuration multiphasée pour l'équipement utilisateur (13).

13. Procédé comprenant les étapes suivantes : recevoir (310), par au moins une unité distribuée (12b) d'une station de base (12'), une demande de paramétrage (SETUP-REQ) d'un équipement utilisateur (13) établissant un accès (A-1) à la station de base (12'), déterminer (312), par l'au moins une unité distribuée (12b), des premières informations (I-1) qui caractérisent a) une position de l'équipement utilisateur (13) par rapport à au moins un composant (12b) de la station de base (12') et/ou b) des conditions radio rencontrées par l'équipement utilisateur (13), et sur la base de la demande de paramétrage (SETUP-REQ), transmettre (314), par l'au moins une unité distribuée (12b), les premières informations (I-1) à une unité centrale (12a) de la station de base (12').

14. Appareil (100') comprenant des moyens (102') pour amener une station de base (12 ; 12') à déterminer (300) des premières informations (I-1) qui caractérisent a) une position d'un équipement utilisateur (13) établissant un accès (A-1) à la station de base (12 ; 12') par rapport à au moins un composant (12 ; 12b) de la station de base (12 ; 12') et/ou b) des conditions radio rencontrées par l'équipement utilisateur (13), et sur la base des premières informations (I-1), à déterminer (302) s'il faut effectuer une configuration monophasée ou une configuration multiphasée pour l'équipement utilisateur (13).

15. Système de communications sans fil (10) comprenant au moins une station de base (12, 12') et au moins un appareil (100, 100a, 100b) selon au moins l'une des revendications 1 à 10.
